Europäisches Patentamt

European Patent Office

Office européen des brevets

(19)

(11) Veröffentlichungsnummer: **0 143 207**
**B1**

(12) # EUROPÄISCHE PATENTSCHRIFT

(45) Veröffentlichungstag der Patentschrift: **31.10.90**

(51) Int. Cl.⁵: **B 23 B 27/00**

(21) Anmeldenummer: **84110381.5**

(22) Anmeldetag: **31.08.84**

(54) Drehmeissel.

(30) Priorität: **03.09.83 DE 3331907**

(43) Veröffentlichungstag der Anmeldung:
**05.06.85 Patentblatt 85/23**

(45) Bekanntmachung des Hinweises auf die
Patenterteilung:
**31.10.90 Patentblatt 90/44**

(84) Benannte Vertragsstaaten:
**AT BE CH FR GB IT LI NL SE**

(56) Entgegenhaltungen:
**CH-A- 254 599**
**CH-A- 391 425**
**DE-C- 520 659**
**FR-A-1 276 843**
**FR-A-2 300 645**
**US-A-1 730 156**
**US-A-4 190 388**

(73) Patentinhaber: **Lehmann, Otto**
**Rudorffweg 11a**
**D-2050 Hamburg 80 (DE)**

(72) Erfinder: **Lehmann, Otto**
**Rudorffweg 11a**
**D-2050 Hamburg 80 (DE)**

(74) Vertreter: **Schmidt-Bogatzky, Jürgen, Dr. Ing.**
**Schlossmühlendamm 4**
**D-2100 Hamburg 90 (DE)**

Courier Press, Leamington Spa, England.

EP 0 143 207 B1

**Beschreibung**

Die Erfindung betrifft ein Drehmeißel für Spindeldrehmaschinen mit Schnellwechsel-Stahlhaltern für einen als Profilkörper ausgebildeten entgegengesetzte plane Einspannflächen aufweisenden Meißelhalter des Drehmeißels, an dessen Endabschnitten einander entgegengesetzt mindestens jeweils ein Schneidstück lösbar derart angeordnet ist, daß die wirksamen Schneidkanten über die Endabschnitte des Meißelhalters ragen und die einander zugeordneten Schneidstücke jeweils eine gleiche horizontale Schneidkantenhöhe aufweisen und bei dem, wenn der Drehmeißel in einen schwenkbaren Schnellwechselhalter eingespannt wird, jeweils das eine oder das entgegengesetzt angeordnete Schneidstück allein durch Verschwenken des Stahlhalters in die entsprechende Schneidlage gebracht werden kann.

Ein derartiger Drehmeißel ist durch die CH-A-391 425 bekannt, die einen Innendrehstahlhalter mit Drehstahl betrifft. Bei diesem Innendrehstahlhalter kann eine gleiche horizontale Schneidkantenhöhe der Drehstähle nur dann erzielt werden, wenn geometrisch identische Drehstähle verwendet werden. Dieser Innendrehstahlhalter ist nur zum Innendrehen vorgesehen und einsetzbar und somit im Anwendungsbereich beschränkt. Für Außendreharbeiten bedarf es eines Austausches des Innendrehstahlhalters durch einen geeigneten weiteren Stahlhalter. Ein weiterer Nachteil dieses Innendrehstahlhalters besteht darin, daß die Drehstähle beim Einsatz in den Innendrehstahlhalter sorgfältig ausgerichtet werden müssen. Da keine Zwangsfixierung der Drehstähle erfolgt, kann die Ausrichtung nur durch sorgfältiges Ausmessen erfolgen, was zeitraubend ist und kostensteigernd wirkt.

Nach der US-A-4 190 388 ist es bekannt, die Schneidstücke mittels eines Exzenters gegen einen Wandabschnitt der Schneideinheit zu drükken. Hierbei besteht die Gefahr, daß diese Klemmverbindung sich beim Einsatz des Stahlhalters löst, was zu Beschädigungen des Werkstücks durch Rattermarken führt. Ferner besteht die Gefahr von Verletzungen der die Drehmaschine bedienenden Person. In Spalte 3, Zeile 36 ff dieser Druckschrift ist ferner ausdrücklich dargelegt, daß üblicherweise nur an einem Ende des Meißelhalters ein Schneidstück angeordnet ist, während an dem anderen Ende des Meißelhalters keine Aufnahmemöglichkeit für ein Schneidstück besteht.

Die Aufgabe der Erfindung besteht darin, den Drehmeißel der eingangs genannten Art so zu verbessern, daß an Spindeldrehmaschinen mit Schnellwechsel-Stahlhaltern mit dem gleichen Werkzeug ein Werkstück sowohl außen wie auch innen aus Ausnehmungen spanabhebend bearbeitet werden kann.

Erfindungsgemäß erfolgt die Lösung der Aufgabe dadurch, daß die Schneidstücke auf mittels lösbaren Kupplungen an den Endabschnitten des Meißelhalters befestigten Schneideinheiten angeordnet und mit diesen mittels Schraub-, Löt-, Schweiß- oder Klebverbindungen verbunden sind. In einer Weiterbildung der Erfindung kann der Meißelhalter aus zwei Haltestaben bestehen, die lösbar oder unlösbar miteinander verbunden sind.

Der erfindungsgemäße Drehmeißel wird nachstehend anhand der in den Zeichnungen dargestellten Ausführungsformen näher erläutert. Es zeigt

Fig. 1 einen Drehmeißel mit wechselbaren Schneideinheiten in der Draufsicht,

Fig. 1a eine weitere Ausführungsform des Meißelhalters des Drehmeißels in der Seitenansicht,

Fig. 2a einen in einen schwenkbaren Stahlhalter eingespannten Drehmeißel in einer Arbeitsstellung für die Außenbearbeitung,

Fig. 2b den Drehmeißel nach Fig. 2a in einer Arbeitsstellung für die Innenbearbeitung.

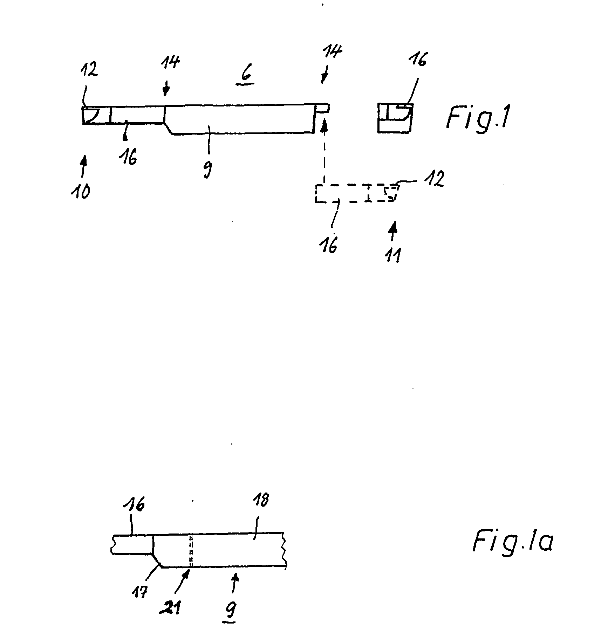

In Fig. 1 ist ein Drehmeißel 6 dargestellt, der einen Meißelhalter 9 aufweist. An den Endabschnitten des Meißelhalters 9 ist jeweils eine Kupplung 14 ausgebildet, mittels derer Schneideinheiten 16 mit dem Meißelhalter 9 lösbar verbindbar sind. Bei Verwendung von Schneideinheiten 16 besteht für den Anwender die Möglichkeit, sich einfach ein komplettes Werkzeugprogramm zusammenzustellen. Da die Einstellung der Schneideinheit 16 außerhalb der Drehmaschine nur einmal erfolgt, ist eine optimale Wiederholungsgenauigkeit gegeben. Zweckmäßigerweise sollte die Größe der auswechselbaren Schneideinheit 16 ein Drittel der Länge des Meißelhalters 9 nicht überschreiten. Die Schneideinheiten 16 können über die Kupplungen 14 sowohl manuell wie auch automatisch auswechselbar sein. Es ist auch möglich den Meißelhalter 9 als Pakethalter für Schneidstücke 12 auszubilden oder aber an dem Meißelhalter 9 Schneidstückmagazine vorzusehen.

An den Endabschnitten 10, 11 jeder Schneideinheit 16 ist jeweils ein Schneidstück 12 angeordnet. Das Schneidstück 12 kann verschiedene geometrische Formen haben. Die Schneidstücke 12 weisen Schneidkanten 13 aus schneidfähigem Material auf, wie z.B. Hartmetall, HSS-Stahl od. dgl. Die Schneidkantenhöhen der Schneidstücke 12 befinden sich jeweils in einer gleichen horizontalen Ebene. Die Schneidkanten 13 sind einander entgegengesetzt ausgerichtet. Die Verbindung der Schneidstücke 12 mit der Schneideinheit 16 kann mittels Schraub-, Klemm-, Löt-, Schweiß oder Klebverbindungen erfolgen.

Der Meißelhalter 9 kann auch aus Haltestäben 17, 18 bestehen, die miteinander lösbar oder unlösbar verbunden sind, wie in Fig. 1a durch Strichlinien angedeutet ist. An den Stoßflächen 21 können die Haltestäbe 17, 18 durch z.B. Stumpfschweißungen verbunden sein. Es ist auch möglich eine andere feste Verbindung oder aber eine lösbare Verbindung vorzusehen.

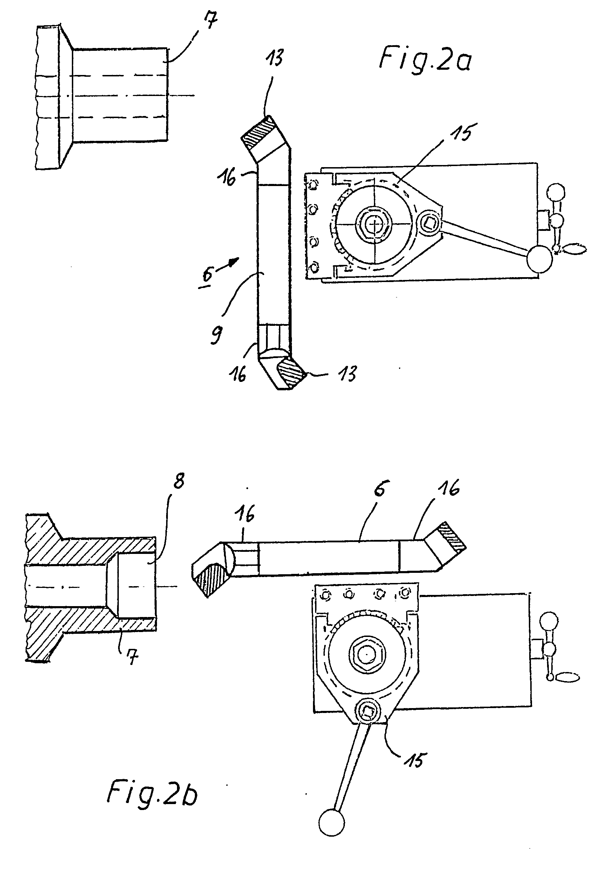

In den Fig. 2a und 2b ist ein Drehmeißel 6 dargestellt, der mit einem Stahlhalter 15 durch Klemmverbindung verbunden werden kann. Der Stahlhalter 15 ist auf dem Support um 90° schwenkbar. Bei der in Fig. 2a dargestellten Betriebsstellung dient die obere Schneidkante 13 des Drehmeißels 6 zur Außenbearbeitung des Werkstücks 7. Nach Schwenken des Stahlhalters 15 um 90° befindet sich die andere Schneidkante 13 in einer Arbeitsstellung für die Innenbearbeitung eines Werkstücks 7. Der Drehmeißel vereinfacht die Arbeit an insbesondere Spindeldrehmaschinen erheblich. Es ist nur eine Einstellung des Drehmeißels vorzunehmen, die bei einem Schwenken des Stahlhalters 15 erhalten bleibt. Durch die Mehrfachfunktion des Drehmeißels 6 verringert sich für den Anwender ferner der Lagerhaltungsaufwand für Drehmeißel, wodurch die Kosten für durchzuführende Dreharbeiten gemindert werden.

**Patentansprüche**

1. Drehmeißel für Spindeldrehmaschinen mit Schnellwechsel-Stahlhaltern für einen als Profilkörper ausgebildete entgegengesetzte plane Einspannflächen aufweisenden Meißelhalter (9) des Drehmeißels (6), an dessen Endabschnitten (10, 11) einander entgegengesetzt mindestens jeweils ein Schneidstück (12) lösbar derart angeordnet ist, daß die wirksamen Schneidkanten über die Endabschnitte des Meißelhalters (9) ragen und die einander zugeordneten Schneidstücke (12) jeweils eine gleiche horizontale Schneidkantenhöhe aufweisen und bei dem, wenn der Drehmeißel in einen schwenkbaren Schnellwechsel-Stahlhalter (15) eingespannt wird, jeweils das eine oder das andere entgegengesetzt angeordnete Schneidstück allein durch Verschwenken des Stahlhalters in die entsprechende Schneidlage gebracht werden kann, dadurch gekennzeichnet, daß die Schneidstücke (12) auf mittels lösbaren Kupplungen (14) an den Endabschnitten des Meißelhalters (9) befestigten Schneideinheiten (16) angeordnet und mit diesen mittels Schraub-, Löt-, Schweiß- oder Klebverbindungen verbunden sind.

2. Drehmeißel nach Anspruch 1, dadurch gekennzeichnet, daß der Meißelhalter (9) aus zwei Haltestäben (17, 18) besteht, die lösbar oder unlösbar miteinander verbunden sind.

**Revendications**

1. Outil de tournage pour machines de tournage à broche à porte-outils à changement rapide, pour support (9) d'outil de tournage (6), présentant des surfaces de serrage opposées planes, constitué en tant qu'élément profilé, aux extrémités (10, 11) duquel outil, opposées les unes aux autres, est fixée, au moins à chacune, une plaquette de coupe (12) démontable, de façon que les tranchants actifs dépassent des extrémités du support (9) et les plaquettes de coupe (12), associées les unes aux autres, présentent respectivement une même hauteur horizontale de tranchant et avec lequel, quand l'outil de coupe est bridé dans un porte-outil (15) basculant à changement rapide, chaque fois un tranchant ou l'autre disposé à l'opposé peut être mis à la position de coupe correspondante par simple pivotement du porte-outil, caractérisé en ce que les plaquettes de coupe (12) sont disposées au moyen de bridages (14) démontables, fixés aux extrémités du support (9), et sont reliées à celles-ci au moyen de liaisons par vis, brasure, soudure ou collage.

2. Outil de coupe, selon la revendication 1 caractérisé en ce que le support (9) se compose de deux barres de maintien (17, 18) qui sont reliées l'une à l'autre de manière démontable ou non-démontable.

**Claims**

1. Turning tool for spindle lathes comprising quick change tool holder for lathe tool holder (9) of turning tool (6), the lathe tool holder being a profile body having plane clamping surfaces which are arranged opposite to each other, at each end section (9, 10) of the turning tool (6) is arranged opposite to each other a cutting piece (12) in such a manner that the effective cutting edges rise above the end sections of lathe tool holder 9, the cutting pieces (12) arranged in an equal horizontal height of cutting edges, each cutting piece (12) is movable by swivelling the quick change tool holder with clamped turning tool to the appropriate position of cutting, characterized in that the cutting pieces (12) are arranged at the end sections of cutting units (16) which are connected with end sections of lathe tool holder (9) by soluble couplers, the cutting pieces (12) are connected to the cutting units (16) by screwed joints, soldering joints, weld joints or adhesive joints.

2. Turning tool according to claim 1, characterized in that the lathe tool holder (9) is made of two holding bars (17, 18) being connected to each other soluble or unsolvable.

*Fig.1*

*Fig.1a*

Fig.2a

Fig.2b